# EUROPÄISCHE PATENTANMELDUNG

(11) **EP 1 882 899 A1**
(43) Veröffentlichungstag der Anmeldung: **30.01.2008**
(21) Anmeldenummer: 06117303.5
(22) Anmeldetag: 17.07.2006
(51) Int. Cl.: G01C 3/00, G01C 3/02, G01S 17/08

(54) **Elektrooptischer Entfernungsmesser**

(71) Anmelder: Leica Geosystems AG, 9435 Heerbrugg (CH)
(72) Erfinder: Jensen, Thomas, CH-9400, Rorschach (CH); Kipfer, Peter, CH-9437, Marbach (CH); Stauffer, Laurent, CH-9443, Widnau (CH)
(74) Vertreter: Büchel, Kaminski & Partner

(57) **Zusammenfassung**

Ein elektrooptischer Entfernungsmesser (4) mit einem Trapezlaser (1) als Laserquelle, einer Empfangsoptik (7) und einem Detektor (8) mit einer Auswerteeinheit (9) zum Empfang und zur distanzmessenden Auswertung der von einem Ziel (ZI) reflektierten Messstrahlung (RS), weist eine Sendeoptik (5) mit Astigmatismuskompensation und zur Kollimation der Laserstrahlung sowie eine Laserquellensteuerung (6) zur Erzeugung gepulster Laserstrahlung mit einer Pulsdauer kleiner als 500 ns und einer Pulsspitzenleistung grösser 1 W auf.

## Beschreibung

Die Erfindung betrifft einen elektrooptischen Entfernungsmesser nach dem Oberbegriff des Anspruch 1 und ein Vermessungsgerät mit einem ebensolchen Entfernungsmesser.

In vielen geodätischen Anwendungen ist die Emission von Laserlicht erforderlich oder vorteilhaft. Dies betrifft insbesondere die elektrooptische Entfernungsmessung mit geodätischen Genauigkeiten, die typischerweise im Millimeter- oder Submillimeterbereich liegen und beispielsweise durch das Pulslaufzeitmesser- oder Phasenmesserprinzip erreichbar sind. Gattungsgemässe und geeignete Verfahren und Vorrichtungen zur Entfernungsmessung werden beispielsweise in der EP 0 738 899 B1 oder der WO2004/074773 beschrieben.

Die Vermessung von Distanzen über die für geodätische Anwendungen erforderlichen grösseren Entfernungen stellt hohe Anforderungen an die Strahlquelle. Für hochgenaue Entfernungsmessungen ist es vorteilhaft, wenn die Strahlungsquelle Strahlung mit einer gut definierten optischen Pulsform bereitstellt. Für eine genaue Distanzmessung nach dem Laufzeitmessprinzip muss dabei die Strahlquelle im ns-Bereich gepulst sein, über eine hohe Pulsspitzenleistung verfügen sowie eine sehr gute Strahlqualität aufweisen, z.B. eine ebene, nicht gekrümmte Emissionswellenfront.

Die aus diesem wichtigsten Anwendungsbereich resultierenden Anforderungen an die Laseremission von geodätischen Geräten betreffen die Leistung und die Modenstruktur. Während bei kontinuierlicher Emission Leistungen im mW-Bereich erzielt werden, ist es für Entfernungsmessungen über grössere Distanzen vorteilhaft, Leistungen im Bereich einiger 10 W zu erreichen, die bei Pulsbetrieb insbesondere durch kurze, aber hochenergetische Pulse erreicht werden können. Daneben sollte ein möglichst kleiner und homogener Strahlquerschnitt zur Verfügung gestellt werden, so dass auch eine Auflösung kleiner Strukturen möglich ist. Der Strahlquerschnitt bzw. das Strahlprofil sollte nach Möglichkeit über die gesamte Messdistanz gleich bleiben bzw. sich nur geringfügig ändern.

In geodätischen Entfernungsmessern des Stands der Technik werden als Laserquellen häufig Laserdioden eingesetzt. Diese Halbleiterlaser haben jedoch den Nachteil, dass sie im Multi-Mode-Betrieb emittieren und als Kantenemitter einen geometrisch ungünstigen Strahlquerschnitt aufweisen.

So existieren im Stand der Technik verschiedene Ansätze, die Emission einer Laserdiode durch geeignete Strahlformungsmittel in eine vorteilhaftere Form zu überführen.

Beispielsweise ist aus der WO 01/84077 ein optischer Entfernungsmesser bekannt, der die Teilstrahlen einer kantenemittierenden Laserdiode durch eine nachgeordnete Strahlformungsoptik derart ablenkt und auf die Apertur einer Objektivlinse lenkt, dass sie dieselbe im wesentlichen ausfüllen. Dabei besitzt die Emission der Laserdiode jedoch noch immer eine Multi-Mode-Charakteristik.

Die zur Leistungssteigerung ebenfalls mögliche Kombination der Emission von vielen einzelnen Laserdioden eines Arrays in einen gemeinsamen Strahl besitzt zudem den Nachteil mangelnder Kohärenz.

Heute erhältliche kommerzielle narrow-stripe Halbleiterlaser mit einer Emissionsfläche von 1x3 µm erlauben zwar eine beugungsbegrenzte Abstrahlung, sind aber nur für den gepulsten Bereich von unter 1 W Pulsspitzenleistung mit noch akzeptabler Lebensdauer, z.B. von 5000 h, geeignet. Höhere Pulsspitzen- oder Peakleistungen führen zu einer irreversiblen Beschädigung der optischen Austrittsfacette (catastrophic optical damage, COD).

Für einen höheren Leistungsbereich ausgelegte Breitstreifenemitter mit Emissionsbreiten von 100 - 500 µm sind bezüglich der maximalen Pulsleistung bis zu einigen 10 Watt im Pulsbetrieb unter 1 µsec belastbar, haben allerdings eine sehr schlechte Abstrahlcharakteristik, d.h. Multimodebetrieb. Die Strahlformung mittels eines diffraktiven Elements oder der Einbau in ein externe Kavität ermöglichen zwar die Optimierung der Abstrahlcharakteristik, allerdings mit erheblichem Aufwand, z.B. hinsichtlich der Resonatorjustage oder mit im Vergleich zu narrow-stripe Emittern deutlich eingeschränkter Qualität (diffraktive Lösung).

Aus der EP 1 517 415 und der WO 2005/029114 ist bekannt, zur Verbesserung der Emission von Laserstrahlung in einem geodätischen Gerät eine Laserquelle zu verwenden, in welcher die Strahlung multimodal emittierender Laserdioden durch eine modenselektive Komponente so beeinflusst wird, dass die von der Laserquelle emittierte Laserstrahlung monomodalen Charakter besitzt. Hierfür wird vorgeschlagen, einen Kantenemitter oder einen vertikalen Halbleiteremitter mit einer externen Kavität zu betreiben, in der sich eine modenselektive Komponente befindet, z.B. eine Monomodefaser oder Resonatorspiegel, die einen modenselektiven Resonatoraufbau bewirken. Zur Kompensation der durch die verlängerte Kavität erzielten grösseren Pulsdauer können zur Pulskompression Komponenten mit negativer Dispersion verwendet werden.

Zudem ist es grundsätzlich möglich, auch andere Lasertypen, z.B. durch Halbleiterlaser gepumpte Mikro-Chip-Festkörperlaser im Single-Mode-Betrieb, in geodätischen Geräten zu verwenden. Allerdings besitzen diese den Nachteil grosser Abmessungen, eines hohen Energieverbrauchs und einer ungünstigen Betriebscharakteristik, z.B. aufgrund thermischer Effekte. Dadurch wird die Praxistauglichkeit solcher Lösungen für den Einsatz zur Vermessung im Feld eingeschränkt.

Dioden-gepumpte Festkörperlaser, erfüllen hinsichtlich der Strahlqualität und der Peakleistung die Anforderungen, sind aber vom Konzept her sehr aufwendig (Pumplaser mit Ansteuerung, Einkoppeloptik, Verstärkungsmedium, Güteschaltung, Resonator) und kostenintensiv. Sie erlauben ausserdem im Allgemeinen keine flexible Anpassung der Pulsrate, da diese durch die hohe thermische Belastung bei niedriger Effizienz limitierend ist.

Eine Aufgabe der vorliegenden Erfindung besteht darin, ein geodätisches Messgerät mit einer Laserquelle bereitzustellen, dessen Emission bei gleicher Leistung eine verbesserte Strahlqualität bzw. bei gleicher Strahlqualität eine höhere Leistung oder sowohl höhere Leistung als auch verbesserte Strahlqualität aufweist.

Eine weitere Aufgabe der vorliegenden Erfindung besteht darin, bauliche Verbesserungen in Hinblick auf Grösse, Komplexität, Energieverbrauch und/oder Aufbau für ein geodätisches Messgerät mit Laserquelle zu ermöglichen.

Diese Aufgaben werden erfindungsgemäss durch die Merkmale des Anspruchs 1 oder durch Merkmale der Unteransprüche gelöst bzw. diese Lösungen weitergebildet.

Die Erfindung basiert auf der Integration von Trapezlasern in geodätische Entfernungsmesser. Trapezlaser oder "tapered diode laser" bzw. "single-mode single-emitter semiconductor laser", wie sie z.B. in der DE 197 17 571 oder der WO 98/49759 dargestellt werden, sind für den cw-Laserbetrieb im Bereich einiger Watt kommerziell erhältlich. Sie bestehen aus einem geführten Wellenleiterbereich (ridgewaveguide), der eine sehr gute Strahlqualität ähnlich einem narrow-stripe Emitter hat und an einen trapezförmigen Bereich (tapered-waveguide) ankoppelt, der praktisch die austretende Mode aufnimmt und intern verstärkt. Somit sind theoretisch Ausgangsleistungen von einigen Watt cw mit nahezu beugungsbegrenzter Strahlqualität von M²<1.5 erreichbar.

Problematisch ist die Integration eines Trapezlasers in ein geodätisches Gerät. Die Emissionsfläche ist mit typischerweise 1x200 µm zwar vergleichbar mit einem Breitstreifenemitter, jedoch besitzt die Emission einen sehr starken Astigmatismus. In der schnell divergenten Achse bzw. fast-axis liegt die Strahltaille an der Emitterfläche, wohingegen im Gegensatz zum Breitstreifenemitter in der slow-axis der scheinbare Emissionspunkt nicht an bzw. in der Nähe der Emitterfläche liegt, sondern an dem Übergang vom geführten Wellenleiterbereich zum trapezförmigen Bereich. Aufgrund dieser starken asymmetrischen Struktur weisen Trapezlaser einen sehr hohen Astigmatismus von ca. 600 µm auf, bei einer Trapezlänge von 2 mm.

Dieses erfordert für die Verwendung in einem geodätischen Gerät die Anpassung einer speziellen Optik zur Kompensation des Astigmatismus und gleichzeitiger Kollimation zur gattungsgemäss erforderlichen Vermessung von Zielen in großer Distanz, wobei auch eine parallele Symmetrisierung des Strahlquerschnittes vorteilhaft ist. Durch die Optik 1 muss somit das Auseinanderfallen der Emissionspunkte in den beiden Achsen korrigiert bzw. kompensiert und eine Zielbeleuchtung auch über grössere Entfernungen ermöglicht werden. Die bei Verwendung von Trapezlasern als Strahlquelle erforderliche Astigmatismuskorrektur unterscheidet sich hierbei von den üblichen strahlbeeinflussenden Massnahmen bei narrow-stripe-Emittern, da bei diesen der Astigmatismus um zwei Grössenordnungen kleiner ist und keine Korrekturen erfordert.

Bei entsprechender Auslegung der Optik ist auch die effiziente Einkopplung in eine monomodige Faser möglich, so dass eine von der Optik unabhängige Positionierung des Trapezlasers und der gepulsten Ansteuerelektronik möglich ist.

Für den Betrieb des Trapezlasers in einem geodätischen Entfernungsmesser wird als Steuerung eine elektrische Pulsschaltung verwendet, die je nach Auflösung und Messgeschwindigkeit für eine Laufzeitmessung Pulslängen zwischen 1 ns und einige 10 ns bei Wiederholraten bis zu 1 MHz liefert. Aufgrund der relativ grossen Emissionsfläche der Trapezlaserdioden können Ausgangsleistungen von über 25 W bei Pulslängen von 5-10 ns und produktrelevanten Lebensdauern realisiert werden. Die Pulsleistungen sind damit vergleichbar zu Breitstreifenemittern bei allerdings rund 20-fach höherer Strahldichte.

Eine weitere Optimierung der Ansteuerung des Trapezlasers kann über eine getrennte Versorgung des geführten Wellenleiterbereich und des trapezförmigen Bereichs erreicht werden. In diesem Fall kann der Diodentreiber aus zwei Bereichen bestehen, die unterschiedliche Stromstärken bereitstellen.

Durch die im Mittel sehr niedrige thermische Belastung des Trapezlasers im Pulsbetrieb - einige mW - gegenüber der Auslegung im cw-Betrieb - einige Watt - ist im allgemeinen eine auf die Strahlqualität äusserst störend wirkende thermische Linsenbildung im trapezförmigen Bereich zu vernachlässigen.

Das Einbringen einer Gitterstruktur, z.B. als DFB-Struktur ("distributed feedback") im geführten Wellenleiterbereich erlaubt neben der räumlichen Monomodigkeit auch eine spektrale Monomodigkeit ("single frequency*"*), was die Vermessung von rauhen, nicht-kooperativen Zielen erleichtert, da im Einfrequenzbetrieb keine Fluktuationen des Speckle-Musters auftreten, die insbesondere bei Teilabschattungen zu einer Verfälschung der Distanzinformation führen können.

Durch die Verwendung einer entsprechenden Ansteuerung, ggf. die Anpassung der Laserdiode und einer die Charakteristik der Trapezlaser berücksichtigenden Optik werden Trapezlaser auch für geodätische Geräte verwendbar bzw. diese verbesserbar, so dass deren Möglichkeiten in Bezug auf Reichweite, Messgenauigkeit - sowohl in Distanz als auch lateral - und Messgeschwindigkeit gesteigert bzw. bei gleichen Parametern der Aufwand und die Komplexität verringert werden können.

Ein erfindungsgemässer elektrooptischer Entfernungsmesser und ein geodätisches Vermessungsgerät sowie hierfür geeignete erfindungsgemässe Laserquellen werden nachfolgend anhand von in der Zeichnung schematisch dargestellten Ausführungsbeispielen rein beispielhaft näher beschrieben. Im einzelnen zeigen
- Fig.1: die schematische Darstellung des strukturellen Aufbaus eines Trapezlasers;
- Fig.2: die schematische Darstellung eines erfindungsgemässen Entfernungsmessers;
- Fig.3: die schematische Darstellung einer ersten Ausführungsform der Sendeoptik für einen erfindungsgemässen Entfernungsmessers;
- Fig.4: die schematische Darstellung einer zweiten Ausführungsform der Sendeoptik für einen erfindungsgemässen Entfernungsmessers;
- Fig.5: die schematische Darstellung einer dritten Ausführungsform der Sendeoptik für einen erfindungsgemässen Entfernungsmessers und
- Fig.6: die schematische Darstellung eines erfindungsgemässen geodätischen Vermessungsgerätes.

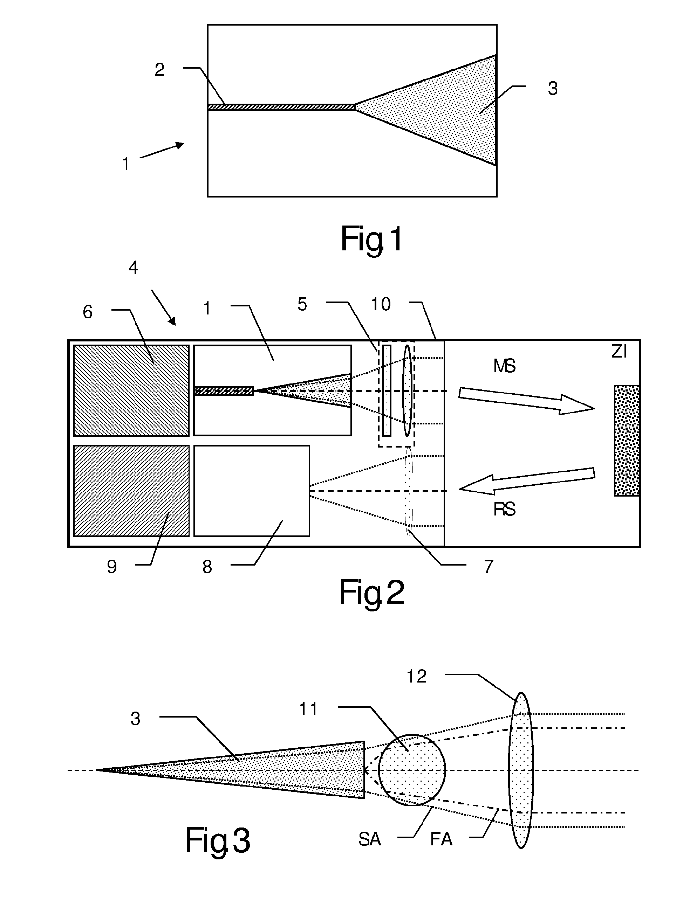

Fig.1 zeigt die schematische Darstellung des strukturellen Aufbaus eines Trapezlasers 1 in der Slow-axis-Ansicht mit dem geführten Wellenleiterbereich 2 und einem trapezförmigen Bereich 3, an den eine Emitterfläche anschliesst. Erfindungsgemäss kann der Trapezlaser mit einer räumlich periodischen Struktur oder Gitterstruktur im geführten Wellenleiterbereich zur Erzeugung einer räumlichen Monomodigkeit ausgebildet werden.

Fig.2 veranschaulicht den Aufbau eines erfindungsgemässen Entfernungsmessers 4 in schematischer Darstellung. Der Entfernungsmesser weist einen Trapezlaser 1 als Laserquelle einer Sendeoptik 5 zur Emission der Laserstrahlung und eine Laserquellensteuerung 6 auf. Die Laserstrahlung wird als Messstrahlung MS auf ein zu vermessendes Ziel ZI emittiert, von dort teilweise als reflektierte Messstrahlung RS von einer Empfangsoptik 7 und einem Detektor 8 empfangen, dessen Signale mit einer Auswerteeinheit 9 in Bezug auf die Entfernung zum Ziel ZI ausgewertet werden. Die Sendeoptik 5 ist erfindungsgemäss zur gleichzeitigen Kompensation der durch die in Fast- und Slow-axis unterschiedlichen Emissionsorte der Strahlung des Trapezlasers 1 bedingten Einflüsse ausgebildet. Die Sendeoptik 5 bewirkt somit eine Astigmatismuskompensation und eine hierzu parallele Kollimation der Laserstrahlung.

Die Laserquellensteuerung 6 ist als Pulsschaltung zur Erzeugung gepulster Laserstrahlung mit einer Pulsdauer kleiner als 500 ns und einer Pulsspitzenleistung grösser 1 W ausgebildet, wobei der Trapezlaser 1 vorteilhafterweise über eine getrennte Versorgung für geführten Wellenleiterbereich und trapezförmigen Bereich verfügen kann. Hierdurch können zwei unterschiedliche Stromstärken für geführten Wellenleiterbereich und trapezförmigen Bereich bereitgestellt werden.

Die Astigmatismuskompensation und eine hierzu parallele Kollimation der Laserstrahlung in einer ersten Ausführungsform der Sendeoptik zeigt Fig.3 in schematischer Darstellung mit einer überlagerten Darstellung der Fast- und Slow-axis-Ansichten bzw. -Strahlgänge. Die aus dem trapezförmigen Bereich 3 emittierte Strahlung wird im Fast-Axis-Strahlgang FA durch eine Zylinderlinse 11 an die Divergenz des Slow-Axis-Strahlgangs SA angepasst, eine nachfolgende Linse 12, die vorzugsweise als Asphäre ausgebildet sein kann, kollimiert die Laserstrahlung in beiden Achsen und emittiert diese als Messstrahlung, ggf. über weitere Optikkomponenten, auf das zu vermessende Ziel. Die optischen Parameter könne für ein Beispiel der ersten Ausführungsform wie folgt angegeben werden. In der Fast-axis wird die Zylinderlinse 11 als eine Gradientenindex-Zylinderlinse von f = 170 µm mit einem Durchmesser von 250 µm ausgebildet und in einer Distanz von ca. 20 µm von der Emitterfläche positioniert. Die Linse 12 ist eine asphärische Linse von 19 mm Brennweite und 6 mm Durchmesser und wird der Zylinderlinse 11 im Abstand von ca. 17 mm nachgeordnet. Die Zylinderlinse 11 hat dabei eine Position, die um wenige µm von der Kollimationsstellung abweicht, um eine Restdivergenz von 7° zu erlauben, die vergleichbar zur Divergenz in der Slow-axis ist. Die Zylinderlinse 11 ist somit geringfügig dejustiert und die Kollimation in der Fast-axis wird durch die spezifische Kombination von Zylinderlinse 11 und asphärischer Linse 12 bewirkt. Ein symmetrischer Strahldurchmesser ist dabei durch die Wahl der Zylinderlinsenbrennweite gegeben. Nachfolgend übernimmt die Asphäre die Kollimation des Strahlenbündels. Der Strahldurchmesser beträgt 4,5 mm und ist mit 0,1 mrad beugungsbegrenzt.

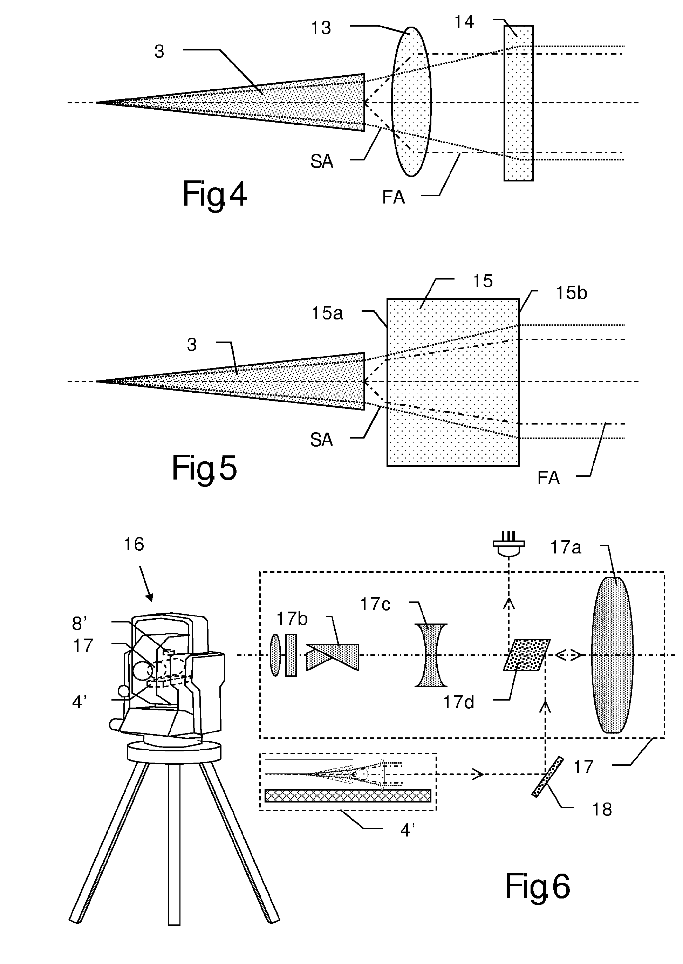

Fig.4 zeigt die schematische Darstellung einer zweiten Ausführungsform der Sendeoptik für einen erfindungsgemässen Entfernungsmessers, wiederum mit einer überlagerten Darstellung der Fast- und Slow-axis-Ansichten bzw. - Strahlgänge. In dieser Ausführungsform wird als Sendeoptik eine Kombination aus zwei Zylinderlinsen verwendet, die so ausgebildet und angeordnet sind, dass eine erste Zylinderlinse 13 die Laserstrahlung den Fast-axis-Strahlgang FA und eine zweite Zylinderlinse 14 den Slow-axis-Strahlgang SA kollimiert. Somit werden die Strahlgänge in Slow- und Fast-axis unabhängig voneinander kollimiert, was auch die achsenspezifische Berücksichtigung der unterschiedlichen Emissionsorte im Trapezlaser bzw. dessen Astigmatismus erlaubt.

In Fig.5 wird eine dritte Ausführungsform der Sendeoptik in einer überlagerten Darstellung der Fast- und Slow-axis-Ansichten bzw. -Strahlgänge gezeigt. In dieser Ausführungsform wird die Abfolge von zwei Linsen durch ein einzelnes diffraktives Element 15 ersetzte, wobei - die dem Trapezlaser zugewandte Stirnseite 15a oder Vorderseite so ausgebildet ist, dass die Divergenz des Fast-axis-Strahlgangs FA an die Divergenz des Slow-axis-Strahlgangs SA angepasst wird und - die dem Trapezlaser abgewandte Stirnseite 15b oder Rückseite die Laserstrahlung in beiden Achsen kollimiert. Alternativ kann auch der Strahlgang der zweiten Ausführungsform durch ein einziges Element realisiert werden. Eine solchermassen integrierte Optik kombiniert somit die Wirkung einer divergenzanpassenden oder in der Fast-axis kollimierenden Zylinderlinse auf der ersten Stirnfläche 15a und einer rotationssymmetrischen oder zweiten zylindrischen Linse auf der zweiten Stirnfläche 15b des diffraktiven Elementes 15, so dass nur ein optisches Element zur Strahlformung benötigt wird.

Fig.6 zeigt die schematische Darstellung eines Tachymeters als ein Beispiel für ein erfindungsgemässes geodätisches Vermessungsgerät 16 mit elektrooptischem Entfernungsmesser, dessen Komponenten und Funktionalität in diesem Beispiel im Vermessungsgerät 16 verteilt und somit integriert sind. Im Gehäuse des Vermessungsgerätes 16 befinden sich als Komponenten der Sendeanteil 4' des Entfernungsmessers, d.h. Laserquelle mit Laserquellensteuerung und Sendeoptik, sowie das optische System 17 und ein Detektor 8' zur Erfassung von zu vermessenden Zielen.

Die Laserstrahlung wird von einem strahlungserzeugenden Trapezlaser und der nachgeschalteten Sendeoptik emittiert und über eine strahlumlenkende Komponente 18 in das optische System 17 des Vermessungsgerätes 16 eingekoppelt. Das optische System 17 zur Erfassung und Vermessung von Zielen weist eine Objektivlinse 17a und eine Okulareinheit 17b auf. Zwischen diesen Komponenten befindet sich ein Fokussierglied 17c und ein reflektierendes Umlenkmittel 17d, mit dessen Hilfe die vom Sendeanteil 4' stammende und in den Strahlgang des optischen Systems 17 eingekoppelte Strahlung über die Objektivlinse 17a emittiert wird. Von einem Ziel zurückreflektierte Strahlung wird wiederum von der Objektivlinse 17a erfasst und ein Teil der Strahlung wird von dem reflektierenden Umlenkmittel 17d auf den Detektor 8' geführt.

In dieser Anordnung kann die Strahlung des Sendeanteils 4' im Zusammenwirken mit dem Detektor 8' zu einer Entfernungsmessung zu einem Ziel verwendet werden. Das dargestellte Beispiel ist nur eine von vielen möglichen Ausführungsformen erfindungsgemässer geodätischer Vermessungsgeräte und dient zur exemplarischen Verdeutlichung eines möglichen Zusammenwirkens von Komponenten.

Es versteht sich, dass diese dargestellten Figuren nur Beispiele möglicher Ausführungsformen schematisch darstellen. So können die genutzten Komponenten auch in anderen Zusammenstellungen und Abfolgen erfindungsgemäss verwendet werden. Darüber hinaus liegt es im Handeln des Fachmanns ergänzende oder alternative optische Komponenten, beispielsweise mit diffraktiver Wirkung, sowie allgemein in der Laserphysik bzw. -technik verwendete Komponenten gleicher oder ähnlicher Wirkung bzw. Funktionalität zu verwenden. In den Darstellungen wurden notwendige elektronische Steuer- und Versorgungsanteile sowie Montagekomponenten lediglich aus Gründen der Anschaulichkeit nicht dargestellt.

## Patentansprüche

1. Elektrooptischen Entfernungsmesser (4) mit
• einer Laserquelle mit einer Laserquellensteuerung (6),
• einer Sendeoptik (5) zur Emission der Laserstrahlung als Messstrahlung (MS) auf ein zu vermessendes Ziel (ZI),
• einer Empfangsoptik (7) und einem Detektor (8,8') mit einer Auswerteeinheit (9) zum Empfang und zur distanzmessenden Auswertung vom Ziel (ZI) reflektierter Messstrahlung (RS),
**dadurch gekennzeichnet, dass**
- die Laserquelle einen Trapezlaser (1) aufweist,
- die Sendeoptik (5) zur Astigmatismuskompensation und zur Kollimation der Laserstrahlung und
- die Laserquellensteuerung (6) zur Erzeugung gepulster Laserstrahlung mit einer Pulsdauer kleiner als 500 ns und einer Pulsspitzenleistung grösser 1 W ausgebildet sind.

2. Entfernungsmesser (4) nach Anspruch 1,
**dadurch gekennzeichnet, dass**
die Sendeoptik (5) eine Kombination aus einer Zylinderlinse (11) und einer nachfolgenden, insbesondere asphärischen, Linse (12) aufweist, wobei
- die Zylinderlinse (11), insbesondere eine Gradientenindex-Zylinderlinse oder asphärische Zylinderlinse, so ausgebildet und angeordnet ist, dass die Divergenz in der Fast-axis an die Divergenz in der Slow-axis angepasst wird und
- die Linse (12) die Laserstrahlung in beiden Achsen kollimiert.

3. Entfernungsmesser (4) nach Anspruch 1,
**dadurch gekennzeichnet, dass**
die Sendeoptik (5) eine Kombination aus zwei Zylinderlinsen aufweist, die so ausgebildet und angeordnet sind, dass
- eine erste Zylinderlinse (13) die Laserstrahlung in der Fast-axis und
- eine zweite Zylinderlinse (14) die Laserstrahlung in der Slow-axis kollimiert.

4. Entfernungsmesser (4) nach Anspruch 1,
**dadurch gekennzeichnet, dass**
die Sendeoptik (5) ein monolithisches oder mehrstückiges diffraktives Element (15) aufweist, wobei
- die dem Trapezlaser (1) zugewandte Stirnseite (15a) so ausgebildet ist, dass die Divergenz in der Fast-axis an die Divergenz in der Slow-axis angepasst wird und
- die dem Trapezlaser (1) abgewandte Stirnseite (15b) die Laserstrahlung in beiden Achsen kollimiert.

5. Entfernungsmesser (4) nach einem der vorangehenden Ansprüche,
**dadurch gekennzeichnet, dass**
die Sendeoptik (5) zur Symmetrisierung des Strahlquerschnitts der Laserstrahlung ausgebildet ist.

6. Entfernungsmesser (4) nach einem der vorangehenden Ansprüche,
**dadurch gekennzeichnet, dass**
die Sendeoptik (5) eine monomodige Faser zur Strahlführung aufweist.

7. Entfernungsmesser (4) nach einem der vorangehenden Ansprüche,
**dadurch gekennzeichnet, dass**
der Trapezlaser (1) eine Gitterstruktur im geführten Wellenleiterbereich (2) zur Erzeugung einer spektralen und räumlichen Monomodigkeit aufweist.

8. Entfernungsmesser (4) nach einem der vorangehenden Ansprüche,
**dadurch gekennzeichnet, dass**
der Trapezlaser (1) eine getrennte Versorgung für geführten Wellenleiterbereich (2) und trapezförmigen Bereich (3) aufweist.

9. Entfernungsmesser (4) nach Anspruch 8,
**dadurch gekennzeichnet, dass**
die getrennte Versorgung zwei unterschiedliche Stromstärken für geführten Wellenleiterbereich (2) und trapezförmigen Bereich (3) bereitstellt.

10. Geodätisches Vermessungsgerät (16), insbesondere Totalstation, Tachymeter oder Laserscanner,
**gekennzeichnet durch**
einen Entfernungsmesser nach einem der Ansprüche 1 bis 9.
